# EUROPÄISCHE PATENTSCHRIFT

(11) **EP 1 232 406 B1**
(45) Veröffentlichungstag und Bekanntmachung des Hinweises auf die Patenterteilung: **14.01.2004**
(21) Anmeldenummer: 00965718.0
(22) Anmeldetag: 19.10.2000
(51) Int. Cl.: G02B 5/10, G02B 26/08

(54) **REFLEKTOR FÜR EIN SPIEGELTELESKOP**
REFLECTOR FOR A MIRROR TELESCOPE
REFLECTEUR POUR UN TELESCOPE A MIROIR

(30) Priorität: 21.10.1999 CH 192999
(43) Veröffentlichungstag der Anmeldung: 21.08.2002
(73) Patentinhaber: Straub, Peter, Oberwil b. Zug 6317 (CH)
(72) Erfinder: Straub, Peter, Oberwil b. Zug 6317 (CH)
(74) Vertreter: Patentanwälte Feldmann & Partner AG
(86) Internationale Anmeldenummer: PCT/CH2000/000565
(87) Internationale Veröffentlichungsnummer: WO 2001/029586

(56) Entgegenhaltungen:
- US-A- 4 364 763
- US-A- 4 678 292
- US-A- 5 291 337
- BELL T E: "ELECTRONICS AND THE STARS" IEEE SPECTRUM,US,IEEE INC. NEW YORK, Bd. 32, Nr. 8, 1. August 1995 (1995-08-01), Seiten 16-24, XP000524852 ISSN: 0018-9235

## Beschreibung

Die Erfindung betrifft einen Reflektor für ein Spiegelteleskop nach dem Oberbegriff des unabhängigen Patentanspruches, wie z.B. bekannt aus US-A-4 678 292.

Diese Reflektoren haben die Aufgabe, das einfallende Licht auf einen Punkt zu fokussieren. Normalerweise wird in einen Glasrohling auf einer Flachseite eine paraboloide Fläche hineingeschliffen. Anschliessend wird diese Oberfläche poliert und schliesslich mit einer reflektierenden Schicht, beispielsweise aus Aluminium oder Silber, beschichtet. Diese dicken Gläser lassen sich mechanisch gut und präzise bearbeiten und weisen zudem mit ihrer Steifheit eine gute Konstanz auf. Der Schleifund Poliervorgang allerdings ist sehr aufwendig, langwierig und daher teuer. Zudem benötigt man relativ schwere Hilfskonstruktionen zum Halten und Manipulieren des dicken Glases. Das Glas muss relativ dick sein und ist daher sehr schwer. Im Betrieb passt sich das dicke Glas nur sehr langsam an die Umgebungstemperatur an, was bei Aenderungen der Temperatur zu schlechter Fokussierung und verminderter Sichtqualität führt.

Aus diesen Gründen werden heute grössere Reflektoren aus einzeln geschliffenen Reflektorelementen zusammengesetzt. Jedes dieser Elemente weist nur einen kleinen Ausschnitt aus der Fläche des gesamten Reflektors auf. Es ist daher einfacher zu bearbeiten und zu manipulieren. Allerdings ist anschliessend ein hochpräzises Montieren jedes Elementes in und auf einer komplizierten Montagestruktur nötig. Diese Art der Herstellung vereinfacht den Schleif- und Polierprozess. Dafür wird zusätzliche optische Instabilität erzeugt, da die Konstruktion des Reflektors aus verschiedenen Materialien besteht, welche unterschiedliches thermisches Verhalten und unterschiedliche Elastizität aufweisen.

Aufgabe der Erfindung ist es, einen Reflektor insbesondere für Spiegelteleskope zu schaffen, welcher einfach und kostengünstig herzustellen ist.

Diese Aufgabe wird durch die in den Patentansprüchen angegebene Erfindung gelöst.

Ein zusätzlicher Vorteil der Erfindung ist, dass der erfindungsgemässe Reflektor auch während dem Betrieb und während Veränderungen durch die Umgebung augenblicklich nachjustierbar ist. Die Möglichkeit zum Nachjustieren bringt sogar neue Möglichkeiten zur Verwendung und Montage eines Spiegelteleskopes.

Die Erfindung wird nachstehend im Zusammenhang mit den Zeichnungen beschrieben. Es zeigen:
- Figur 1: Die Herstellung eines Glases für den erfindungsgemässen Reflektor;
- Figur 2: den Aufbau des Reflektors;
- Figur 3: eine schematische Darstellung der Justiermöglichkeit; und

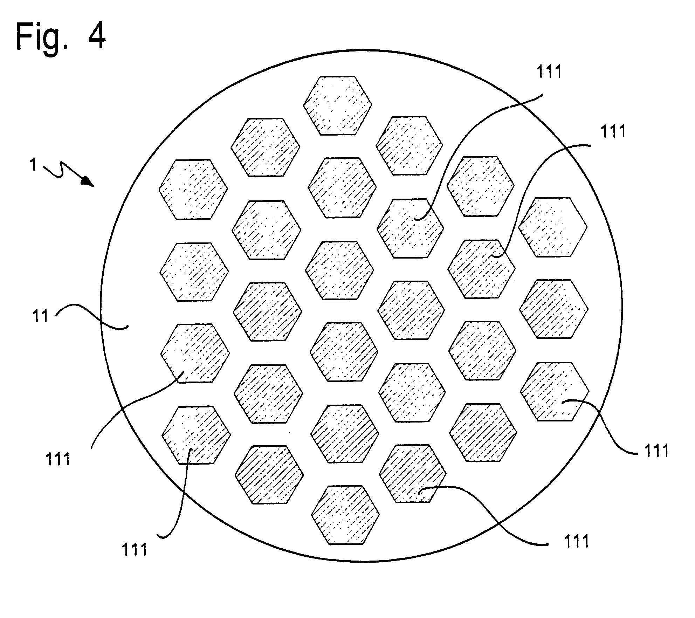

- Figur 4: eine schematische Darstellung einer Rückseite eines Glaskörpers gemäss einer Ausführungsform der Erfindung.

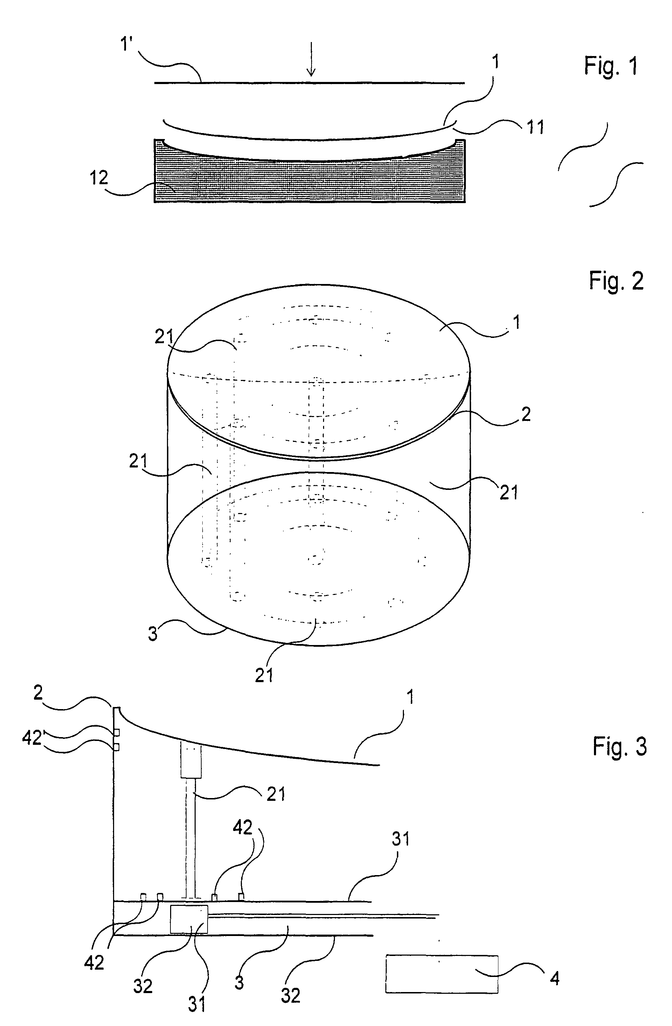

Für einen erfindungsgemässen Reflektor für ein Spiegelteleskop wird ein Glaskörper aus einem dünnen Borsilicat-Glas verwendet. Dazu wird eine Scheibe, wie in der Figur 1 dargestellt, mit möglichst konstanter Dicke in einer Negativ-Form so vorgeformt, dass sie die paraboloide Form erhält, welche für einen solchen Paraboloid-Reflektor notwendig ist. Dies geschieht unter dem Einfluss von Wärme und Druck oder auch mit Hilfe eines Vakuums in der Negativform. Nach einem Abkühlprozess weist die Glasscheibe 1 nun die gewünschte Parabolform auf. Die Dicke dieser Glasplatte ist etwa zwischen 30 µm und 1000 µm. Sie wird vorher oder nach dem Vorgang des Vorformens einseitig oder beidseitig verspiegelt. Dazu wird sie mit einer minimalen metallischen Schicht beschichtet. Geeignet ist beispielsweise eine Schicht von Aluminium oder von Silber.

Eine solche Glasplatte allein weist natürlich nie die Festigkeit und geometrische Konstanz auf, wie dies bei einem herkömmlichen Spiegel der Fall ist. Im Gegenteil ist eine solche Glasplatte bis zu einem gewissen Grad sogar elastisch. Gerade diese Elastizität verbunden mit dem sehr kleinen Gewicht wird für den neuen Reflektor benützt.

Der Aufbau der Reflektors ist aus der Figur 2 gut ersichtlich. Um die notwendige optische Konstanz zu erhalten wird daher die paraboloid vorgeformte dünne Glasplatte 1 aus Borsilicat-Glas an ihrem Umfang in einem Rahmen 2 befestigt. Sie ist in diesem Rahmen 2 ein- und aufgespannt gehalten. Dies kann durch Klemmung oder Klebung erfolgen. Der Rahmen 2 befindet sich in festem Abstand von einer darunter, also auf der konvexen Rückseite 12 der Glasplatte 1, vorhandenen Grundplatte 3. Die Grundplatte 3 ist eine stabile Platte aus Metall oder Kunststoff. Die Verbindung von Rahmen 2 und Grundplatte kann ein dünnwandiger Zylinder sein. Er ist aus möglichst wärme-unempfindlichen Material hergestellt, damit die Distanz zwischen Grundplatte 3 und Rahmen 2 konstant bleibt und ein Temperatureinfluss auf diese Distanz möglichst verhindert wird.

Zwischen der Grundplatte 3 und der konvexen Seite der Glasplatte 1 ist eine Anzahl Justierelemente 21 angeordnet. Die Justierelemente 21 sind in regelmässigen Abständen auf einem oder mehreren konzentrischen Kreisen an der konvexen Rückseite der Glasplatte angeordnet und befestigt. Dabei kann ein Justierelement im Zentrum angeordnet sein. Geeignet als Justierelemente 21 sind stabförmige Elemente um die Glasplatte mit der Grundplatte zu verbinden. Die Justierelemente haben die Aufgabe, die exakte Form der Glasplatte 1 zu garantieren, indem sie ihr die zusätzliche Steife respektive Formgenauigkeit garantieren.

Ganz neue Möglichkeiten ergeben sich gerade durch die Verwendung dieser Justierelemente 21. Aus der Figur 3 ist ersichtlich, wie ein Justierelement längenverstellbar sein kann. Zur Längenverstellung wird in einer Variante das Justierelement 21 mit einem feinen Gewinde versehen. Es wird in einem Fuss 31 mit einem Gewindegegenstück an der Grundplatte 3 gehalten. Nun kann durch einfaches Verdrehen entweder der stabförmigen Justierelementes 21 oder des Fusses 31 die Länge verändert werden. Dazu ist das Justierelement 21 an der Refelktorunterseite drehbar gelagert befestigt. Dadurch wird der Reflektor im Bereich dieses Justierelementes minimal nach unten gezogen oder nach oben gedrückt. Auf diese Weise kann unter Ausnützung der Elastizität der dünnen Glasplatte 1 die paraboloide Form genau nachjustiert werden, bis sich die gespiegelten Lichtstrahlen optimal im Brennpunkt treffen.

Eine leichte und genügend stabile Grundplatte 3 erhält man, indem man diese aus einer dünnen Oberplatte 31 und einer davon beabstandeten dünnen Unterplatte 32 herstellt. Die Oberplatte 31 und die Unterplatte 32 werden dazu mittels Versteifungen verbunden oder der Zwischenraum wird mit einem leichten Füllstoff gefüllt. Auf oder unter der Grundplatte oder im Hohlraum dieser Ausführung der Grundplatte 3 kann man nun fernbedienbare Justiervorrichtungen 32 in den Füssen 31 für jedes Justierelement 21 anordnen. Diese fernbedienbaren Justiervorrichtungen werden mit einem Regelsystem 4 verbunden. Das Regelsystem 4 berechnet Korrekturanweisungen zum Justieren des Reflektors und steuert die einzelnen Justiervorrichtungen 32.

Für die Justiervorrichtungen 32 gibt es mehrere Möglichkeiten, welche jede ihre eigenen Vorzüge aufweist.
Einmal kann für jedes Justierelement 21 ein kleiner Elektromotor, ein Schrittmotor oder dergleichen über ein Getriebe die Justierung, das heisst die Längenverstellung des Justierelementes 21 betätigen. Dies kann beispielsweise direkt über das oben erwähnte Gewinde des Justierelementes bewirkt werden, indem der Fuss 31 oder das Justierelement 21 selbst gedreht wird.
In einer anderen Ausführungsform wird im Fuss 31 ein Piezokristall oder ein Element aus Piezokeramik angeordnet. Dieses wird durch Anlegen einer Spannung so angeregt, dass es seine Länge verändert. Durch die Steuerung des Stromes kann nun das Justierelement respektive der Abstand zwischen Grundplatte 3 und Reflektor verändert und justiert werden. Statt Piezoelemente können auch magnetostriktive Elemente verwendet werden, wobei die Funktionsweise analog ist.
In einer weiteren Variante werden im Fuss 31 Heizelemente angeordnet, welche über die temperaturabhängige Ausdehnung des Justierelementes 21 dessen Länge beeinflussen.
In einer weiteren Variante werden Permanentmagnete im Fuss 31 angeordnet, welche über partielle Abschirmung ihres Feldes mit ferromagnetischen Anteilen in den Justierelementen zusammenwirken.

Für eine Steuerung des Regelsystemes 4 werden Sensoren 42 im Bereich der Grundplatte 3 und allenfalls auch Sensoren 42' im Bereich des Rahmens 2 angeordnet. Mittels diesen kann die Form der konvexen Rückseite 11 des Reflektors direkt oder indirekt gemessen werden. Aus den Messwerten dieser Sensoren 42, 42' werden die Korrekturwerte für die Form des Reflektors im Regelsystem gerechnet und die Justiervorrichtungen 32 aktiviert und betätigt. Die Ueberwachung der Form des Reflektors kann durch optische Mittel im Bereich des Brennpunktes des Reflektors selbst vorgenommen werden, was es ermöglicht, die Genauigkeit weiter zu optimieren. Die Regelung der Justiervorrichungen 32 geschieht analog über das Regelsystem 4.

In einer vorteilhaften Ausführungsform der vorliegenden Erfindung wird die Rückseite 11 des Reflektors 1, respektive des Dünnglases strukturiert metallisiert. Dadurch kann der Abstand zwischen dieser Metallisierung und der Grundplatte 3 mittels der sich einstellenden Kapazität sehr einfach und äusserst genau ermittelt werden. Die Metallisierung der Reflektorrückseite 11 ist im Gegensatz zu der Oberseite nicht vollflächig, sondern in einzelne Teilbereiche aufgeteilt. Ein Beispiel für eine Mögliche Geometrie der Teilflächenanordnung 111 ist in der Figur 3 dargestellt. Die Metallisierung besteht zum Beispiel aus Kupfer und/oder magnetischen Materialien.
Die beidseitige Metallisierung des Reflektors 1 erlaubt es die Dickenverteilung des Dünnglases 1 über die sich einstellenden Teilkapazitätswerte zwischen Ober- und Unterseite 11 des Reflektors 1 zu ermitteln.

Ein Reflektor dieser Art wird nicht mehr durch die Arbeitstemperatur und andere Einflüsse von ausserhalb, wie Erschütterungen, vorbeifahrende Züge etc. beeinträchtigt. Jeder mögliche Einfluss zeigt sich sofort in einer minimalen Verformung des Reflektors, welche sogleich von den Sensoren erfasst und über das Regelsystem 4 kompensiert wird.

Die Regelung und Formkorrektur des Reflektors mittels der Justierelemente 21 ergibt sogar ganz neue zusätzliche Möglichkeiten in der Benützung eines Spiegelteleskopes. Beispielsweise können kleine Bewegungen des zu beobachtenden Objektes ohne Korrektur der Aufhängung oder des Stativs des Teleskops verfolgt werden. Dazu wird nur über das Regelsystem 4 die Form des Reflektors minimal soweit verändert, dass das Bild im Brennpunkt fokussiert bleibt.

## Patentansprüche

1. Reflektor für ein Spiegelteleskop mit einem Glaskörper mit einer paraboloid geformten Oberfläche und mindestens einer einseitig verspiegelten Reflexionsoberfläche, wobei der Glaskörper aus einer in Paraboloid-Form vorgeformten Glasplatte (1) aus Borsilicat-Glas besteht und an ihrem Umfang in einem Rahmen (2) gehalten ist, **dadurch gekennzeichnet, dass** die Glasplatte (1) dünn und elastisch ist und im Abstand von einer Grundplatte (3) gehalten ist und dass der Rahmen (2) einen festen Abstand am Umfang der Glasplatte (1) von der Grundplatte (3) bestimmt und dass eine Anzahl von Justierelementen (21) zwischen der Glasplatte (1) und der Grundplatte (3) in regelmässigen Abständen voneinander und im Abstand vom Rahmen (2) angeordnet sind, wobei die Justierelemente (21) zur Justierung des Abstandes der Glasplatte (1) von der Grundplatte (3) längenverstellbar sind.

2. Reflektor nach Anspruch 1, **dadurch gekennzeichnet, dass** jedes Justierelement mit einer eigenen Justiervorrichtung (31) wirkverbunden ist, wobei jede Justiervorrichtung (31) einzeln mittels eines Regelsystemes (4) so steuerbar ist, dass die Länge des Justierelementes (21) gesteuert veränderbar ist.

3. Reflektor nach Anspruch 1, **dadurch gekennzeichnet, dass** das Justierelement (21) mit einem Schraubengewinde versehen ist, welches im Eingriff mit einem Gewinde in der Justiervorrichtung (31) steht.

4. Reflektor nach Anspruch 2, **dadurch gekennzeichnet, dass** die Justiervorrichtung (31) einen Elektromotor und ein Getriebe zur Justierung des Abstandes der Glasplatte (1) von der Grundplatte (3) umfasst.

5. Reflektor nach Anspruch 2, **dadurch gekennzeichnet, dass** die Justiervorrichtung (31) Piezokristalle umfasst zur Justierung des Abstandes der Glasplatte (1) von der Grundplatte (3).

6. Reflektor nach Anspruch 2, **dadurch gekennzeichnet, dass** die Justiervorrichtung (31) Heizelemente, mittels welchen die Justierelemente temperaturabhängig längenverstellbar sind, umfasst, zur Justierung des Abstandes der Glasplatte (1) von der Grundplatte (3).

7. Reflektor nach Anspruch 2, **dadurch gekennzeichnet, dass** die Justiervorrichtung (31) Permanentmagnete umfasst zur Justierung des Abstandes der Glasplatte (1) von der Grundplatte (3).

8. Reflektor nach Anspruch 2, **dadurch gekennzeichnet, dass** die Justiervorrichtung (31) magnetostriktive Elemente umfasst zur Justierung des Abstandes der Glasplatte (1) von der Grundplatte (3).

9. Reflektor nach Anspruch 1 **dadurch gekennzeichnet, dass** die Unterseite (11) des Dünnglases (1) zumindest teilweise metallisiert ist, wobei die Metallisierung aus mehreren voneinander getrennten in Fläche, Form und Anordnung genau definierten Teilflächen (111) besteht.

10. Reflektor nach einem der Ansprüche 2 bis 9, **dadurch gekennzeichnet, dass** Sensoren (42) zur Ueberwachung der Paraboloidform der Glasplatte (1) vorhanden sind, mittels deren Signalen die Justiervorrichtungen (31) durch das Regelsystem (4) steuerbar sind.

11. Reflektor nach Anspruch 10 **dadurch gekennzeichnet, dass** die Sensoren (42,42') am Rahmen (2) im Bereich des Umfanges der Glasplatte (1) und/oder an der Grundplatte (3) angeordnet sind.

12. Reflektor nach Anspruch 10 **dadurch gekennzeichnet, dass** die Sensoren (42,42') mit dem durch die Glasplatte bestimmten Brennpunkt optisch wirkverbunden sind.

## Claims

1. A reflector for a mirror telescope with a glass body with a paraboloidly shaped surface and at least one reflection surface mirrored on one side, wherein the glass body consists of a glass plate (1) of borosilicate glass preformed in a paraboloid shape and at its circumference is held in a frame (2), **characterised in that** the glass plate (1) is thin and elastic and is held at a distance to a base plate (3) and that the frame (2) determines a fixed distance at the circumference of the glass plate (1) to the base plate (3) and that a number of adjusting elements (21) are arranged between the glass plate (1) and the base plate (3) at regular distances to one another and at a distance to the frame (2), wherein the adjusting elements (21) are adjustable in length for adjusting the distance of the glass plate (1) to the base plate (3).

2. A reflector according to claim 1, **characterised in that** each adjusting element is in active connection with its own adjusting device (31), wherein each adjusting device (31) individually by way of a control system (4) can be controlled such that the length of the adjusting element (21) may be changed in a controlled manner.

3. A reflector according to claim 1, **characterised in that** each adjusting element (21) is provided with a screw thread which is in engagement with a thread in the adjusting device (31).

4. A reflector according to claim 2, **characterised in that** the adjusting device (31) comprises an electric motor and a gear for adjusting the distance of the glass plate (1) to the base plate (3).

5. A reflector according to claim 2, **characterised in that** the adjusting device (31) comprises piezo-crystals for adjusting the distance of the glass plate (1) to the base plate (3).

6. A reflector according to claim 2, **characterised in that** the adjusting device (21) comprises heating elements, by way of which the adjusting elements are temperature-dependently adjustable in length, for adjusting the distance of the glass plate (1) to the base plate (3).

7. A reflector according to claim 2, **characterised in that** the adjusting device (31) comprises permanent magnets for adjusting the distance of the glass plate (1) to the base plate (3).

8. A reflector according to claim 2, **characterised in that** the adjusting device (31) comprises magnetostrictive elements for adjusting the distance of glass plate (1) to the base plate (3).

9. A reflector according to claim 1, **characterised in that** the lower side (11) of the thin glass (1) is at least partly metallised, wherein the metallisation consists of several part surfaces (111) which are separated from one another and are exactly defined in area, shape and arrangement.

10. A reflector according to one of the claims 2 to 9, **characterised in that** there are present sensors (42) for monitoring the paraboloid shape of the glass plate (1), by way of whose signals the adjusting devices (31) are controllable by the control system (4).

11. A reflector according to claim 10, **characterised in that** the sensors (42, 42') are arranged on the frame (2) in the region of the circumference of the glass plate (1) and/or on the base plate (3).

12. A reflector according to claim 10, **characterised in that** the sensors (42, 42') are optically actively connected to the focus determined by the glass plate.

## Revendications

1. Réflecteur pour un télescope à miroir, comprenant un corps en verre doté d'une surface en forme de paraboloïde et d'au moins une face sur laquelle est appliquée une couche réfléchissante, sachant que le corps en verre est composé d'une plaque de verre (1) en verre au borosilicate qui a été préformée en forme de paraboloïde et qui est fixée dans un cadre (2) au niveau de son pourtour, **caractérisé en ce que** la plaque de verre (1) est mince et élastique et est maintenue à distance d'une plaque de base (3), **en ce que** le cadre (2) détermine un écart fixe entre le pourtour de la plaque de verre (1) et la plaque de base (3), et **en ce qu'**entre la plaque de verre (1) et la plaque de base (3), de nombreux éléments d'ajustement sont disposés à intervalles réguliers les uns des autres et à distance du cadre (2), sachant que la longueur des éléments d'ajustement (21) est réglable afin d'ajuster l'écart entre la plaque de verre (1) et la plaque de base (3).

2. Réflecteur selon la revendication 1, **caractérisé en ce que** chaque élément d'ajustement est en liaison active avec un dispositif d'ajustement (31) qui lui est propre, sachant que chaque dispositif d'ajustement (31) peut être commandé individuellement au moyen d'un système de régulation (4) de telle sorte que la longueur de l'élément d'ajustement (21) puisse être modifiée de façon commandée.

3. Réflecteur selon la revendication 1, **caractérisé en ce que** l'élément d'ajustement (21) est muni d'un filetage qui est en prise avec un taraudage dans le dispositif d'ajustement (31).

4. Réflecteur selon la revendication 2, **caractérisé en ce que** le dispositif d'ajustement (31) comprend un moteur électrique et un mécanisme pour ajuster l'écart entre la plaque de verre (1) et la plaque de base (3).

5. Réflecteur selon la revendication 2, **caractérisé en ce que** le dispositif d'ajustement (31) comprend des cristaux piézoélectriques pour ajuster l'écart entre la plaque de verre (1) et la plaque de base (3).

6. Réflecteur selon la revendication 2, **caractérisé en ce que** le dispositif d'ajustement (31) comporte des éléments chauffants qui permettent de faire varier la longueur des éléments d'ajustement en fonction de la température, pour ajuster l'écart entre la plaque de verre (1) et la plaque de base (3).

7. Réflecteur selon la revendication 2, **caractérisé en ce que** le dispositif d'ajustement (31) comprend des aimants permanents pour ajuster l'écart entre la plaque de verre (1) et la plaque de base (3).

8. Réflecteur selon la revendication 2, **caractérisé en ce que** le dispositif d'ajustement (31) comprend des éléments magnétostrictifs pour ajuster l'écart entre la plaque de verre (1) et la plaque de base (3).

9. Réflecteur selon la revendication 1, **caractérisé en ce que** le dessous (11) de la mince plaque de verre (1) est au moins en partie métallisée, la métallisation étant composée de plusieurs parties de surface (111) distinctes les unes des autres et précisément définies en termes de superficie, forme et situation.

10. Réflecteur selon l'une des revendications 2 à 9, **caractérisé en ce que** des capteurs (42) sont prévus pour surveiller la forme paraboloïde de la plaque de verre (1), au moyen des signaux desquels le système de régulation (4) peut commander les dispositifs d'ajustement (31).

11. Réflecteur selon la revendication 10, **caractérisé en ce que** les capteurs (42, 42') sont placés sur le cadre (2) dans la zone du pourtour de la plaque de verre (1) et/ou sur la plaque de base (3).

12. Réflecteur selon la revendication 10, **caractérisé en ce que** les capteurs (42, 42') sont en liaison active du point de vue optique avec le foyer défini par la plaque de verre.
